# EUROPÄISCHE PATENTSCHRIFT

(11) **EP 2 576 878 B1**
(45) Veröffentlichungstag und Bekanntmachung des Hinweises auf die Patenterteilung: **09.11.2016**
(21) Anmeldenummer: 11748710.8
(22) Anmeldetag: 01.06.2011
(51) Int. Cl.: D03D 15/00, B60N 2/58

(54) **BEZUGSSTOFF FUER AUTOSITZE AUS REGENERATIVEN NATURFASERN**
AUTO SEAT COVER FABRIC COMPRISING REGENERATIVE NATURAL FIBRES
MATIÈRE DE GARNISSAGE POUR SIÈGES D'AUTOMOBILE EN FIBRES NATURELLES RÉGÉNÉRATIVES

(30) Priorität: 07.06.2010 DE 202010007668 U
(43) Veröffentlichungstag der Anmeldung: 10.04.2013
(73) Patentinhaber: Oschatz, Christian, 79597 Schallbach (DE)
(72) Erfinder: Oschatz, Christian, 79597 Schallbach (DE)
(74) Vertreter: D'haemer, Jan Constant
(86) Internationale Anmeldenummer: PCT/IB2011/001194
(87) Internationale Veröffentlichungsnummer: WO 2011/154793

(56) Entgegenhaltungen:
- GB-A- 433 721
- US-A1- 2006 223 404

## Beschreibung

### Stand der Technik und deren Mängel:

Der heutige Stand der Technik besteht darin, dass das Automobil- und Flugzeuginterieur insbesondere in Bezug auf die Polsterstoffe ausschließlich aus reinen Kunststoffen auf Erdölbasis wie Polyester, Polypropylenen u.s.w. produziert wird. Diese genannten rein synthetischen Fasersubstrate verursachen in ihrer Herstellung nicht nur einen sehr hohen CO₂-Aufwand sondern sind auch bezüglich ihres umweltfeindlichen Verhaltens in der Entsorgung danach wegen ihrer Unverrottbarkeit immer problematischer.
Da diese Erdölkunststoffe zusätzlich auch in ihrer Preisgestaltung stark vom Rohölpreis abhängig sind, ist zukünftig zu erwarten, dass bei weiter steigenden Rohölpreisen der Herstellungspreis aller rein synthetischen Fasern stark zunehmen wird.

Aus der GB 433721 ist ein Auto-Polsterstoff bekannt, der aus Leinen und Viskose besteht, wobei die Garne aus Leinen mit sehr dunnen Viskosestreifen umwickelt sind. Über die Reissfestigkeit und den Faserabrieb dieses Polsterstoffs und über die genaue Garnstärke der Garne wird in dieser Patentschrift aus dem Jahr 1935 nichts ausgesagt.

Aus der US 2006/0223404 ist ein Polsterstoff bekannt, der aus natürlich abbaubaren Fasern besteht und aus einer wasserdurchlässigen und einer wasseraufsaugenden Schicht zusammengesetzt ist. Als wasserdurchlässige Schicht wird wasserabweisender Leinen eingesetzt und über die Reissfestigkeit und den Faserabrieb dieses Polsterstoffs und über die genaue Garnstärke der Garne wird in dieser Patentschrift wieder nichts ausgesagt.

### Technisches Problem und deren Lösung durch die Erfindung:

Die Erfindung eines neuartigen natürlichen Bezugsstoffes für Autositze zielt nun darauf ab, bisherige synthetischen Fasersubstrate wie PES, Polypropylen u.s.w., die auf Basis von Erdölverbindungen aufgebaut sind, als Autobezugsstoffe durch reine oder in Mischung befindliche natürliche, regenerative nachwachsende Rohstoffmaterialien zu ersetzen.

Gegenstand der Erfindung ist daher ein Autositz-Polsterstoff aus ausschließlich nachwachsenden umweltfreundlichen Naturfaserstoffen, wobei der Hauptbestandteil aus Leinen besteht. Angestrebt werden langfasrige Leinenfasern und Mischungen aus Leinen mit Baumwolle, Bambus, Wolle und/oder Viskose (Regeneratcellulosefaser), die vornehmlich als Filamente von regenerativen Naturfasermischungen in Frage kommen. Bevorzugt sind Mischungen aus 50% Leinen und 50 % Baumwolle, Bambus und/oder Viskose-Filament in Mischverhältnis Baumwolle und /oder anderen Naturzellulosefasern je zwischen 0 und 50% und Viskose-Filament 0 bis max. 50% wobei der Anteil der Baumwolle bis max. 40 % durch Viskose-Filament ersetzt werden kann.

Abgesehen von deren physiologischen Veruvendungsvorteilen durch Naturkomfort in modernen Kraftfahrzeugen sowie deren umweltfreundlichen Eigenschaften wie Verrottbarkeit und der gegebenen Möglichkeit des natürlichen Nachwachsens dieses Faserrohstoffes, reduziert sich auch der heute in der Politik und öffentlichen Meinung im Mittelpunkt stehende CO₂-Aufwand in der Produktion dieses neuartigen Autopolsterbezugsstoffes aus Leinenfasern und deren natürlichen Zumischungen erheblich. Untersuchungen (siehe z. B. Grafic: Nova-Institut 2007; Eyerer & Reinhardt 2000, Pless 2001, BaFa 2006, Ifeu 2005 resp. SachsenLeinen 2006b und DaimlerCrysler 1997) zeigen, dass Naturfasern wie Flachs und Hanf im Vergleich zu Erdöl- und Glasfasern in der Herstellung einen bis 83 % geringeren kumulierten Energieaufwand (KEA) aufgrund des natürlichen Wachsens erforderlich macht.

Die Unabhängigkeit des natürlichen Faserrohstoffes von den starken Preisschwankungen der bisher zum Einsatz gelangenden reinen Erdölkunststoffe wie PES, Polypropylenen u.s.w. aufgrund der Schwankungen der Erdölpreise führt zu weiteren wesentlich wirtschaftlicheren und preislichen Vorteilen.

Ein weiteres Ziel der Erfindung ist es, ein natürliches regenerierbares Produkt als Autopolsterbezugsstoff in seinem physiologischen als auch echtheitsmäßigen Verhalten an den bisherigen Stand der Technik und dem Anforderungsprofil der Autoindustrie heranzuführen, anzugleichen und zu verbessern.

Das technische Problem liegt insbesondere darin, dass die Autoindustrie an diesen neuen natürlichen Autobezugsstoff mindestens die gleichen Anforderungen stellt wie an die bisherigen Erdölkunststoffbezüge. Es handelt sich hier in erster Linie um folgende Anforderungen, die erfüllt oder verbessert werden müssen:
1) Alle Scheuer- und Reißfestigkeiten (Abration resistance and tensile strength) geprüft nach dem Martindale-Festigkeitstest als strengsten Test
2) Dehnungstest (elongation test)
3) Heißlichtechteiten (getestet nach dem FAKRA-Echtheitstest als strengsten Test)
4) Flammfestigkeit
5) Reibechtheiten trocken/naß
6) Anschmutzresistenz
7) Schimmel- und Verrottungsbeständigkeit

Die Wirtschaftlichkeit der Produktion und der Produktendpreis muß im Vergleich zum Erdölkunststoffautobezugsstoff (PES) ebenfalls gleich gut oder besser sein.

Um diese Anforderungen zu erfüllen, sind in folgenden Produktionsbereichen dieser Produkteneuheit zur Eignungsmachung für die Autoindustrie Entwicklungen durchgeführt worden, die das Erfindungsprodukt zu einem neuen Stand der Technik brachte.

### Optimierung der Naturfasermischungen

Für Autobezugsstoffe aus reinen Naturfasern werden in der Produktion hohe Ansprüche an Faser-Stapellänge, Faserqualität, Faserobefläche, Zwirnungsdrehungen zur Erfüllung der hohen Anforderungen wie Reißfestigkeit und Faserabrieb im Autositzgebrauch (Martindale Test mit Mindestanforderungen von 50.000 Touren) gestellt.

Aufgabe der Erfindung ist nun eine maximale Flächenqualität hochwertiger Fasern in Kombination mit Mischungen aus Fasern mit glatten Oberflächen wie Viskose-Filamente und diese im Hinblick auf ihre Verwendung zu optimieren. Zu den Mischungen zählen in erster Linie Leinen, Baumwolle, Bambus und Viskose/Modalfaser als Filament. Die minimalen Anforderungen sind ein Warengewicht zwischen 100 und 700 g/m² (bevorzugt zwischen 200 und 600 g/m²).

### Spinnen und Weben

Die Autopolsterflächenstrukturen und Warengewichte müssen den Anforderungen und Wünschen der Autoindustrie entsprechen und durch ausgesuchte entsprechende Garnfeinheiten, optimalste Spinndrehungen(Zwirneffect), Webbindungen wie Panama, Köper, Atlas, usw., Dichte in Kette und Schuß der Naturfasermischungen und Mischverhältnisse aufeinander abgestimmt werden. Hier sind die minimalen Anforderungen:
- Warenbreite : zwischen 1 m und 3 m, bevorzugt zwischen 1,40 und 1,60 m
- Warengewicht: zwischen 100 und 700 g/m²,bevorzugt zwischen 200 und 600 g/m²
- Dichte/10 cm: Kette zwischen 50 und 600,bevorzugt zwischen 100 und 500 Schuß zwischen 50 und 300, bevorzugt zwischen 100 und 200
- Garnfeinheit : Kette 20 -200 tex, bevorzugt 40 - 60 tex Schuß Leinen 50 - 300, bevorzugt 100 -200 tex

### Hierzu 3 Beispiele:

| | | |
|---|---|---|
| Web-Muster 1: | Mischung: | Leinen/Baumwolle 50/50 |
| | Warenbreite: | 1,55 m |
| | Warengewicht: | 320 g/m² |
| | Dichte/ 10 cm: | Kette 155 (warp) |
| | | Schuß 152 (weft) |
| | Garnfeinheit: | Kette Baumwolle Nm 20 (= 50 tex) |
| | | Schuß Leinen Nm 9,6 (= 103 tex) |
| | | |
| Web-Muster 2 : | Mischung: | Leinen/Baumwolle 50/50 |
| | Warenbreite: | 1,53 m |
| | Warengewicht: | 430 g/m² |
| | Dichte / 10 cm: | Kette 321 |
| | | Schuß 146 |
| | Garnfeinheit: | Kette Baumwolle 50 tex |
| | | Schuß Leinen 170 tex |
| | | |
| Web-Muster 3: | Mischung: | Leinen/Baumwolle 50/50 |
| | Warenbreite: | 1,52 m |
| | Warengewicht: | 375 g/m² |
| | Dichte/10 cm: | Kette 416 |
| | | Schuß 138 |
| | Garnfeinheit: | Kette Baumwolle 50 tex |
| | | Schuß Leinen 110 tex |
| | | |
| Web-Muster 4: | Mischung: | Leinen/Baumwolle 50/50 gebleicht |
| | Warenbreite: | 1,49 m |
| | Warengewicht: | 440 g/m² |
| | Garndrehung: | Nm 20/1 (=50 tex) Baumwolle -612/m |
| | | Leinen Nm 6,8 (=140 tex) - 309/m |

Auch Maschenwaren können zum Einsatz gelangen.

### Vorbehandlung

Ein weiterer Schritt zur Erzielung der erwünschten Anforderungen ist eine nach Stand der Technik auszuführende Vorbehandlung für Leinen und deren Cellulose-Mischungen wie Entschlichten, Entmineralisieren und Bleichen sowie ein spezieller Merzerisierprozeß zur Verringerung des Faserabriebverhaltens und Steigerung der geforderten Echtheit betr. Martindale-Touren (Minimum 50.000 Touren).

Die Merzerisierung wird mit hochkonzentrierter Natronlaugeflotte und etwas Alkylsulfonat unter Warenspannung durchgeführt, beispielsweise nach folgender Methode:

| | | |
|---|---|---|
| Rezeptur: | 8,0 ml/kg | Alkylsulfonat |
| | 743,0 ml/kg(30°Bé) | Natronlauge 36°Bè |

Behandlung: 60 sek. Tauchzeit Danach mindestens 2 min kalt verweilen unter Warenspannung
Spülen: Bei 25°C/ 70°C/25°C je 3 min Tauchzeit
Neutralisieren: mit Sirrix NE fl (Clariant)

Ein zusätzlicher vorteilhafter Effekt der Merzerisation ist, daß der Farbstoffaufbau und die Durchfärbung insbesondere für tiefe Färbungen wie Schwarz wesentlich verbessert wird.

| | |
|---|---|
| 1. Beispiel: | Mischmuster CO/Leinen 50/50 gebleicht,nicht merzerisiert |
| 2. Beispiel: | Mischmuster CO/Leinen 50/50 gebleicht und merzerisiert |

### Färbeprozeß

Ein Naturfaser-Autopolsterstoff bestehend aus Leinen und deren Mischungen mit Baumwolle oder anderweitigen Cellulosefasern wie Bambus und Viskose muß mit anderen Farbstoffen im Vergleich zu PES gefärbt werden. Während PES mit Dispersionsfarbstoffen gefärbt wird, kann dieses erfindungsgemässe Produkt in erster Linie mit Reaktiv-, Substantiv- oder aber Küpen- oder Schwefelfarbstoffen gefärbt werden. Aus Gründen der hohen Echtheitsanforderungen für diesen Verwendungszweck kommen jedoch bevorzugt Reaktivfarbstoffe in Frage.

Ein weiterer wichtiger Teil der Erfindung ist, daß die von der Autoindustrie geforderten hohen Lichtechtheiten und Hcißlichtcchtheiten (mehrfache FAKRA-Heißlichtechheiten), wie sie mittlerweile von Dispersionsfarbstoffen auf PES erfüllt werden können, durch diese Erfindung nunmehr auch von speziell ausgewählten Reaktivfarbstoffen auf natürlichen Cellulosefasern wie Leinen und den angeführten Mischungen mit Baumwolle und anderweitigen Mischungen mit Cellulosefasern wie Viskose und Bambus erreicht werden können.

Ein weiterer Aspekt der Erfindung ist also eine gezielte Auswahl von geeigneten hochlichtechten Reaktivfarbstoffen als Einzelfarbstoffe und Komponenten für hochlichtechte Trichromien aus bestehenden Reaktivfarbstoffgammen herauszuselektionieren.
Es kommen alle Einfach- und Mehrfachanker-Reaktivfarbstoffe sowie Schwefel- und Küpenfarbstoffe in Frage. Im Reaktivfarbstoffbereich handelt es sich um folgende

Reaktivkomponenten: Dichlortriazin, Fluorchlorpyrimidin (FCP), Dichlorchinoxalin, Monofluortriazin, 2 x Monofluortriazin, Monochlortriazin + Vinylsulfon, Trifluorpyrimidin, Monofluortriazin/Monochlortriazin+ Vinylsulfon, Fluorchlorpyrimidin/Monochlortriazin + Vinylsulfon, Vinylsulfon oder 2 x Vinylsulfon, Monochlortriazin, 2x Monochlortriazin, Monochlortriazin modifiziert, Trichlorpyrimidin.

Bevorzugt sind speziell ausgewählte Reaktivfarbstoffe auf Basis Einfach/ Mehrfachanker mit Fluorchlorpyrimidin als Hauptreaktivkomponente.

Da die Licht- und FAKRA-Echtheiten einerseits u.a. auch vom Farbstoff-Fixiergrad abhängig sind, andererseits jedoch auch ein hoch wirtschaftliches produktives Färbeverfahren aus preislichen Gründen gefordert ist, erstreckte sich dem zu Folge die Entwicklung auf die Erarbeitung optimalster Färbeverfahren.

Folgende geeignete Färbeverfahren stehen dazu bevorzugt zur Verfügung:
- 1.: Kalt-Verweilverfahren (KKV) als Semikontinue-Verfahren
- 2.: E-Control-Verfahren (Neuentwicklung der Fa. A.Monforts /ICI, EP 081016) Vollkontinue-Verfahren
- 3.: Pad Dry Thermofix-Verfahren, Vollkontinue-Verfahren
- 4.: Pad Dry Steam- Verfahren, Vollkontinue-Verfahren
- 5*.*: Chemical Pad Steam-Verfahren, Vollkontinue-Verfahren
- 6.: Ausziehverfahren, diskontinuierliches Verfahren im Stück
- 7.: Ausziehverfahren, diskontinuierliches Verfahren im Garn

Die Warengewichte bei Autopolsterstoffen liegen zwischen 100 und 700 g/m², bevorzugt zwischen 300 und 600 g/m² und am meisten bevorzugt um 400 g/m². Bei Qualitäten um 400 g/m² dieses Artikels muß einerseits eine sehr gute Durchfärbung sichergestellt sein, andererseits der wirtschaftlichste Färbeprozeß zur Anwendung gelangen. Um beides in Einklang zu bringen, besteht von Seiten der Chemie zusätzlich die Möglichkeit, spezielle Farbflottenzusätze wie

### 10 - 60 g/l, bevorzugt 20 -50 g/l eines Polymerisationsproduktes auf Acrylamidbasis

einzusetzen, die die Farbstoffdiffusion unterstützen, zur Erzielung einer verbesserten Warendurchfärbung. Zur bestmöglichen Durchfärbung wurden Verfahren und Flottenrezept zur höchstmöglichen Farbstoffdiffusion optimiert.

Die nachfolgenden Färbebeispiele fallen nicht unter den Erfindungsgegenstand:

### Beispiel 1:

Leinen/Baumwoll-Autopolsterstoff, ca. 430 g/m2, Web-Muster 2 von Seite 3, entschlichtet, entmineralisiert, gebleicht, mercerisiert, wird im semikontinuierlichen Kaltverweilverfahren folgender Rezeptur für eine Schwarzfärbung

| | |
|---|---|
| 45 g/l | Reaktiv Orange CI RO 69 |
| 25 g/l | Reaktiv Rubinol CI RR 171 |
| 70 g/l | Reaktiv Blau CI RB 209 |

| | |
|---|---|
| 50 g/l | Harnstoff (Lösungsmittel für Farbstoff) |
| 1 ml/l | nichtionogenes Netzmittel |
| 1ml/l | Sequestriermittel (Komplexbildner) |

mit Mischpumpe eine Alkaliflotte folgender Zusammensetzung

| | |
|---|---|
| 50 ml/l | Na Silicat 38°Bè |
| 12 ml/l | NaOH 36 °Bè |

im Verhältnis 1: 4 kontinuierlich der Farbflotte zugeführt und damit im Foulard die Ware foulardiert. Flottentemperatur : 20°C

Anschließend wird die Ware 4 Stunden kalt verweilt und ausgewaschen wie folgt:
kalt spülen in Weichwasser, kochend seifen mit 2 ml/l Waschmittel Typ Ladipur RSK liq. spülen in heißem Weichwasser, spülen in kaltem Weichwasser, mit Essigsäure neutralisieren und trocknen.

Man erhält eine tiefe, egale, gut durchgefärbte Schwarzfärbung mit perfekten Lichtechtheiten (FAKRA 3 fach Note 8, Xenon Note 8) und weiteren guten Naßechtheiten.

### Beispiel 2:

Leinen/Baumwolle-Autopolsterstoff, 320 g/m², Web-Muster 1 von Seite 3, entschlichtet, entmineralisiert, gebleicht, merzerisiert, wird im neuartigen vollkontinuierlichen E-Control-Verfahren der Firma Monforts folgender Rezeptur gefärbt:

| | |
|---|---|
| 45 g/l | Reaktiv Orange CI RO 69 |
| 25 g/l | Reaktiv Rubinol CI RR 171 |
| 70 g/l | Reaktiv Blau CI RB 209 |
| 100 g/l | Harnstoff |
| 1 ml/l | nichtionogenes Netzmittel |

Mit Mischpumpe wird separat im Flottenverhältnis 1: 4 Alkaliflotte mit 24 g/l Soda ash dem Färbefoulard zugeführt. Flottentemp.: 20 °C
Die Ware wird auf der E-Controllanlage bestehend aus IR Vortrockner und Hotflue konstant mit einem Klima von 25 % Feuchte und 75 % Luft und einer Kammertemperatur von 125 °C beschickt (Warentemperatur beträgt dann ca. 69 °C), dann foulardiert, vorgetrocknet, fertiggetrocknet und dabei gleichzeitig der Farbstoff fixiert.

Anschließend wird die Ware wie folgt ausgewaschen:
Kalt spülen in Weichwasser
Kochend seifen mit 2 ml/l Waschmittel Typ Ladipur RSK liq.
Heiß spülen in Weichwasser
Kalt spülen in Weichwasser
Neutralisieren mit Essigsäure
Trocknen

Man erhält eine tiefe, egale, gut durchgefärbte Schwarzfärbung mit perfekten Lichtechtheiten (FAKRA 3-Fach Note 8, im Grau-Masstab Note 4.5, Xenon perfekt Note 8 im Blau-Masstab) und weiteren guten Naß- und Reibechheiten.

### Beispiel 3

Leinen/Baumwolle - Autopolsterstoff, 320 g/m², Web-Muster 1 von Seite 3, entschlichtet, entmineralisiert, gebleicht, merzerisiert, wird im semikontinuierlichen Kaltvenveilverfahren folgender Rezeptur gefärbt:

| | |
|---|---|
| 3,9 g/l | Reaktiv Orange CI RO 69 |
| 2,8 g/l | Reaktiv Rubinol CI RR 171 |
| 5,0 g/l | Reaktiv Blau CI RB 209 |
| 1 ml/l | nichtinonogenes Netzmittel |
| 1 ml/l | Sequestriermittel (Komplexbildner) |

Mit Mischpumpe wird separat im Flottenverhältnis 1 : 4 Alkaliflotte folgender Zusammensetzung der Färbeflotte zugeführt:

| | |
|---|---|
| 50 ml/l | Natriumsilikat 38°Bé |
| 5 ml/l | NaOH 36 °Bé |

Färbeflottentemperatur 20°C

Die so gefärbte Ware wird anschließend 4 Stunden kalt verweilt und ausgewaschen wie folgt:
Kalt spülen in Weichwasser
Kochend seifen mit 2 ml/l Waschmittel vom Typ Ladipur RSK liq.
Heiß spülen in Weichwasser
Kalt spülen in Weichwasser
Neutralisieren mit Essigsäure
Trocknen

Man erhält eine egale, gut durchgefärbte Hellgrau-Färbung mit sehr guten Naß- und Reibechtheiten mit einer Xenon-Lichtechheit im Blau-Masstab Note 6,5. Die mehrfach FAKRA Lichtechtheit erreicht noch nicht ganz den hohen Standart der Schwarzfärbung und muß verbessert werden.

### Beispiel 4

Leinen/Baumwoll-Autopolsterstoff, 320 g/m², Webmuster 1 von Seite 3, entschlichtel, entmineralisiert, gebleicht und merzerisiert wird im neuartigen vollkontinuierlichen E-Controlverfahren Monforts folgender Rezeptur gefärbt:

| | |
|---|---|
| 3, 9 g/l | Reaktiv Orange CI RO 69 |
| 2,8 g/l | Reaktiv Rubinol CI RR 171 |
| 5,0 g/l | Reaktiv Blau CI RB 209 |
| 1,0 ml/l | nichtionogenes Netzmittel |

Mit Mischpumpe wird separat im Flottenverhältnis 1 : 4 Alkaliflotte mit 14 g/l Soda ash dem Färbefoulard zugeführt. Flottentemperatur : 20 °C

Die Ware wird auf der E-Controllanlage bestehend aus IR Vortrockner und Hotflue konstant mit einem Klima von 25 % Feuchte und 75 % Luft und einer Kammertemperatur von 125 °C beschickt (Warentemperatur beträgt dann ca. 69°C), dann foulardiert, vorgetrocknet, fertiggetrocknet und dabei gleichzeitig der Farbstoff fixiert.

Anschließend wird die Ware wie folgt ausgewaschen:
Kalt spülen in Weichwasser
Kochend seifen mit 2 ml/l Waschmittel Typ Ladipur RSK liq.
Heiß spülen in Weichwasser
Kalt spülen in Weichwasser
Neutralisieren mit Essigsäure
Trocknen

Man erhält eine egale, gut durchgefärbte Hellgrau-Färbung mit sehr guten Naß- und Reibechtheiten, mit einer Xenon - Lichtechheit im Blau-Masstab Note 6,5. Die mehrfach FAKRA-Lichtechtheit erreicht noch nicht ganz den hohen Standard der Schwarzfärbung und muß noch verbessert werden.

### Beispiel 5

Leinen/Baumwolle 50/50, 430 g/m² (Web-Muster 4), gebleicht und hochgezwirnt als Schwarzfärbung im Kaltverweilverfahren. Dieses neue Muster wird mit im Ausziehverfahren gebleichten hochgezwirnten Garnen gewebt. Dadurch wird die Echtheit im Martindale-Festigkeitstest auf 60.000 Touren gesteigert.

### Beispiel 6

Ware: 100% Leinen, ca 120 g/m², gebleicht
Kontinue-Verfahrensvergleich: Kalt-Verweilverfahren gegen E-Control-Verfahren

Rezeptur Kalt-Verweilverfahren:
32 g/l Reactive Orange CI RO 69
50 ml/l Na-Wasserglas 38°Bè
15 ml/l Natronlauge 36 °Bè
Verweilzeit: 8 h, anschließend auswaschen und trocknen

Rezeptur E-Control-Verfahren
32 g/l Reactive Orange CI RO 6
10 g/l Soda ash
2,5 ml/l Natronlauge 36°Bè

Die Ware wird auf der E-Control-Anlage,wie bereits beschrieben, bestehend aus IR-Vortrockner und Hotflue konstant mit einem Klima von 25 % Feuchte und 75% Luft und einer Kammertemperatur von 125 °C beschickt (Warentemperatur beträgt dann ca. 69°C), wobei nach dem Foulardieren bei diesem speziellen Fixierprozeß gleichzeitig vorgetrocknet, fertiggetrocknet und dabei auch gleichzeitig der Farbstoff fixiert wird. Anschließend wird die Ware dann gewaschen und getrocknet wie bereits beschrieben.
Es konnten zwei einwandfrei egale tiefe brilliante rein Leinenfärbungen erstellt werden.
Im Vergleich der beiden unterschiedlichen Färbeprozesse ist eine nahezu gleich tiefe Färbung erzielt worden.

Bei einem weiteren Versuch im gleichen Vergleich auf 100% Leinen gleicher Ware in einem dunklen Reaktivblau mit 90 g/l Farbstoff unter gleichen Färbebedingungen konnten ebenfalls zwei einwandfreie egale tiefe brilliante rein Leinenfärbungen erreicht werden. Im Vergleich der beiden Verfahren erbrachte die Färbung nach dem E-Control-Verfahren eine 13 % tiefere Färbung.

### Aus rüstungsprozeß

Im Ausrüstungsprozeß wird das nunmehr mercerisierte und gefärbte natürliche Autopolsterstoff-Produkt aus Leinen/Baumwolle dem bestehenden Anforderungsprofil der Autoindustrie in 3 Schritten wie folgt angepaßt:
1. Verrottungs- und Schimmelschutz (Microbakterieller Schutz)
2. Flammschutz
3. Abriebbeständigkeit (Abrasion resistance)
   Scheuerb eständigkeit
   Antipilling
   Anschmutzungsresistenz

Die Schritte 1,2,3 müssen in der Reihenfolge eingehalten werden.

### Ausrüstungsbeispiel Schritt 1 (Microbakterieller Schutz)

Die Verrottungs- und Schimmelschutzausrüstung geschieht in einem getrennten Verfahren mit dem speziellen Produkt:

### Sanitize 2724, ein Produkt der Sanitized AG, Schweiz

mit einer Behandlungskonzentration von 0,5 - 2 % bezogen auf das Warengewicht. Im Foulardierverfahren durch foulardieren oder aufsprühen, mit anschliessender Trocknung bei 100 - 150° C Trocknungstemperatur. Die Behandlung wird direkt nach dem Färbe- und Trocknungsprozess durchgeführt. Da es sich bei dieser Erfindung um ein reines Naturprodukt handelt, ist die Verrottungs- und Schimmelschutzausrüstung unbedingt erforderlich.

### Ausrüstungsbeispiel Schritt 2 (Flammschutzausrüstung)

Die Flammschutzausrüstung wird im 2. Schritt nach dem heutigen Stand der Technik ausgeführt, wobei Phosphat - oder Silikonprodukte, bevorzugt Phosphatprodukte zum Einsatz gelangen.
Einsatz-Konzentration: 100 bis max. 500 g/l, bevorzugt 200 - 300 g/l

Die Flotte wird auffoulardiert und anschliessend wird bei 100 - 150° C getrocknet. Die Behandlung wird separat nach dem Auftrag des antibakteriellen Produkt durchgeführt oder kann ggf. in Kombination mit der anschliessenden Ausrüstung für den Abriebschutz vollzogen werden. Durch Optimierung der Produkte und deren Konzentrationen wurde Sorge getragen, daß die guten Trocken- und Naßreibechtheiten der Reaktivfärbung nicht beeinträchtigt werden.

### Ausrüstungsbeispiel Schritt 3

| | | |
|---|---|---|
| Rezeptur: | 100 g/l | Basis Polyacrylat Entwicklungsprodukt |
| | 5 g/l | Fluor-Carbon Produkt (nicht ionogen) |
| | 0,3g/l | Netzmittel (anionaktiv) |
| | Nach | Bedarf auch Weichmacher |

Foulardapplikation, Naßaufnahme 80 %, 1 min bei 150°C effektiv getrocknet und kondensiert.

Die Scheuerbeständigkeit des schwarzgefärbten Musters wurde im Martindale-Testverfahren nach EN ISO 12947-1 mit 12 Kpa bei 5.000 Touren, 10.000 Touren, 20.000 Touren, 50.000 Touren geprüft. Das erfinderische 100 % reine Naturautopolstermuster konnte den Test bis 50.000 Touren unbeschadet durchstehen.

Das Überraschende des gesamten Ausrüstungsbereiches liegt darin, daß die nach der Färbung und Trocknung erzielten physiologischen und echtheitsmäßigen Ergebnisse, vornehmlich die FAKRA-, Xenon-Lichtechtheiten, die Reibechtheiten sowie die Abriebsbeständigkeit nach Martindale nicht beeinträchtigt sondern verbessert wurden, so daß das Endprodukt den hohen Anforderungen der Autoindustrie gerecht wird. Ein reines Naturprodukt ersetzt ein Erdöl-Kunstfaserprodukt und erfüllt die hohen Anforderungen der Autoindustrie in gleicher Weise.

### Vorteile der neuen Erfindung zusammengefaßt:

1. Ein Autositzpolsterstoff bestehend aus reinen pflanzlichen Naturprodukten, der die hohen physiologischen, echtheits- und sicherheitsrelevanten Anforderungen der Autoindustrie erfüllt.
2. Das Produkt ist bei der Entsorgung zu 100 % verrottbar und verfügt damit über höchst umweltfreundliche Eigenschaften.
3. Es besteht zu 100 % aus natürlich nachwachsenden Rohstoffen mit hoher Nachhaltigkeit.
4. Der CO₂ -Aufwand, gerechnet nach dem kumulierten Energieaufwand (KEA), liegt für die Herstellung dieses Naturproduktes im Vergleich zur Produktion des bisherigen Produktes aus Erdöl- oder Glasfasern um 83 % niedriger.
5. Das erfindungsgemäße neue Gebrauchsprodukt auf der Grundlage nachwachsender, umweltfreundlicher Rohprodukte ist unabhängig von den starken Preisschwankungen der Erdölprodukte auf dem Weltmarkt und der Preis stabil und kalkulierbar.
6. Physiologische Vorteile der reinen Naturfasern.
7. Kein elektrostatisches Aufladen der naturreinen Autositzfasern

## Patentansprüche

1. Ein Autositz-Polsterstoff der ausschließlich aus nachwachsenden umwelt-freundlichen Naturfaserstoffen mit einem Hauptbestandteil aus Leinen besteht, **dadurch gekennzeichnet, dass** der Polsterstoff eine Reissfestigkeit und Faserabrieb gemäss Martindale Test von mindestens 50.000 Touren aufweist, und daß dieser Autositzpolsterstoff semi-oder vollkontinuierlich resp. im Stück oder Garn diskontinuierlich im Ausziehverfahren gefärbt wird mit einer Färbeflotte, der 10 - 60 g/l eines Polymerisationsproduktes auf Acrylamidbasis zur Verbesserung der Durchfärbung und der Farbstoffdiffusion zugesetzt wird, und dass dieser foulardiert wird mit einer Ausrüstungsflotte enthaltend 50 - 200 g/l eines speziellen Polyacrylates, 2 - 15 g/l eines nichtionogenen Fluor-Carbon Produktes und 0,2- 2 g/l anionaktives Netzmittel sowie nach Bedarf einen Weichmacher und anschließend 1 min bei 150°C getrocknet und fixiert wird.

2. Autositzpolsterstoff gemäß Anspruch 1, **dadurch gekennzeichnet, daß** dieser aus Leinen und zusätzlich eingearbeiteten Cellulosefasern wie Baumwolle, Bambus und/oder beigemischter Viskose besteht.

3. Autositzpolsterstoff gemäß Anspruch 1 oder 2, **dadurch gekennzeichnet, daß** dieser aus mindestens 50 % Leinen und der Rest aus Baumwolle, Bambus und/oder Viskose-Filament in Mischverhältnis Baumwolle und/oder anderen Naturzellulosefasern je zwischen 0 und 50% und Viskose-Filament 0 bis max. 50 % besteht.

4. Autositzpolsterstoff gemäß Anspruch 1, 2 oder 3, **dadurch gekennzeichnet, daß** dieser aus 50% Leinen und 50 % Baumwolle besteht, wobei der Anteil der Baumwolle durch Viskose-Filament bis max. 40 % ersetzt werden kann.

5. Autositzpolsterstoff gemäß einem der Ansprüche 1 bis 4, **dadurch gekennzeichnet, daß** dieser ein Warengewicht zwischen 100 und 700 g/m2, bevorzugt zwischen 200 und 600 g/m2 aufweist.

6. Autositzpolsterstoff gemäß einem der Ansprüche 1 bis 5, **dadurch gekennzeichnet, dass** dieser Autositzpolsterstoff gewaschen, entschlichtet, entmineralisiert, gebleicht und merzerisiert wird.

7. Autositzpolsterstoff gemäß Anspruch 1, **dadurch gekennzeichnet, daß** hochlichtechte Küpenfarbstoffe oder mono- oder multifunktionelle Reaktivfarbstoffen als Einzelfarbstoffe und Trichromiekomponenten zum Einsatz kommen, die auch allen anderen Echtheitsanforderungen wie Reib- und Naßechtheiten der Autoindustrie gerecht werden.

8. Autositzpolsterstoff gemäß einem der Ansprüche 1 bis 7, **dadurch gekennzeichnet, daß** dieser mit einem speziellen Produkt auf **Basis Sanitize 2724** gegen Verrottung und Schimmelschutz in einem getrennten Verfahren foulardiert oder aufgesprüht und getrocknet wird.

9. Autositzpolsterstoff gemäß einem der Ansprüche 1 bis 8, **dadurch gekennzeichnet, daß** dieser mit einer Flammfestausrüstung auf Basis einer Phosphatverbindung ausgerüstet wird, die weder die Lichtechheiten (FAKRA) noch die Reibechtheiten beeinträchtigt.

## Claims

1. An automotive seat upholstery fabric consisting exclusively of renewable and environmental-friendly natural fiber material wherein the major component is linen, **characterized in that** the fabric has an abrasion resistance and tensile strength according to the Martindale test of at least 50.000 revolutions and that the fabric is semi- or fully continuously dyed or as yarn or pieces discontinuously by exhaustion dyeing with a dye liquor in which is added 10 - 60 g/l of an acrylamide-based polymerization product for improving the through-dyeing and the dyestuff diffusion, and that it is padded with an additional finishing liquor containing 50 - 200 g/l of a special nature polyacrylate, 2 - 15 g/l of a non-ionic fluorocarbon product and from 0.2 - 2 g/l anionic wetting agent and optionally a softener product and then dried for 1 min at 150°C and fixed.

2. Automotive seat upholstery fabric according to claim 1, **characterized in that** it consists of linen and additionally incorporated cellulose fibers such as cotton, bamboo and/or admixed viscose.

3. Automotive seat upholstery fabric according to claim 1 or 2, **characterized in that** it consists of at least 50 % linen and the balance consists of cotton, bamboo and/or viscose filament in mixing ratio of cotton and/or other natural cellulose fibers each between 0 and 50 % and viscose filament 0 up to maximum 50 %.

4. Automotive seat upholstery fabric according to claim 1, 2 or 3, **characterized in that** it consists of 50 % linen and 50 % cotton wherein up to 40% of cotton is replaced by viscose filament.

5. Automotive seat upholstery fabric according to one of the claims 1 to 4, **characterized in that** it has a weight between 100 and 700 g/m², preferably between 200 and 600g/m².

6. Automotive seat upholstery fabric according to one of the claims 1 to 5, **characterized in that** the fabric is washed, desized, demineralized, bleached and mercerized.

7. Automotive seat upholstery fabric according of claim 1, **characterized in that** high lightfast vat or mono- or multifunctional reactive dyestuffs are used as single dyestuffs and as components of a trichromy which are capable of meeting all fastness requirements of the automobile industry such as rubbing- and wet fastnesses.

8. Automotive seat upholstery fabric according to one of the claims 1 to 7, **characterized in that** this fabric is padded or sprayed with a special product on the basis of **Sanitize 2724** against decay and mold in a separate process and afterwards dried.

9. Automotive seat upholstery fabric according to one of the claims 1 to 8, **characterized in that** this fabric is finished with a flame-resistant finishing based on a phosphate compound which impairs neither the light fastness (FAKRA) nor the rubbing fastness.

## Revendications

1. Un tissu pour garniture de siège d'auto fait exclusivement de matériaux en fibres naturelles recyclables et respectueux de l'environnement dont le composant principal est le lin, charactérisé par les faits que le tissu a une résistance à l'abrasion et à la déchirure d'au moins 50.000 rotations d'après le test de Martindale et que le tissu est teint par une méthode à la continue ou semi-continue ou, comme fil ou en pièce, de façon discontinue par un procédé par épuisement dans un bain de teinture dans lequel est ajouté 10 - 60 g/l d'un produit polymère à base d'acrylamide pour améliorer la pénétration et la diffusion du colorant, et que le tissu est foulardé avec un bain de finissage contenant 50 - 200 g/l d'un polyacrylate spécial, 2 - 15 g/l d'un produit fluorocarboné non-ionique et de 0.2 - 2 g/l d'un agent mouillant anionique et, en cas de besoin, d'un produit adoussissant et que le tissu est enfin séché et fixé pendant 1 minute à 150°C.

2. Tissu pour garniture de siège d'auto selon la revendication 1, charactérisé par le fait qu' il se compose de lin et qu'en plus, sont incorporées des fibres cellulosiques comme le coton, bambou et/ou en mélange avec la viscose.

3. Tissu pour garniture de siège d'auto selon la revendication 1 ou 2, charactérisé par le fait qu'il se compose d'au moins 50 % de lin et que le reste est fait de coton, bambou et/ou filament de viscose avec un rapport de mélange de coton et/ou autres fibres de cellulose naturelle compris pour chacun entre 0 et 50 % et de 0 à maximum 50 % de filament de viscose.

4. Tissu pour garniture de siège d'auto selon la revendication 1, 2 ou 3, charactérisé par le fait qu'il se compose de 50 % de lin et 50 % de coton et que jusqu'à 40 % du coton peut être remplacé par du filament de viscose.

5. Tissu pour garniture de siège d'auto selon une des revendications 1 à 4, **caractérisé par le fait que** son poids est compris entre 100 et 700 g/m², de préférence entre 200 et 600g/m².

6. Tissu pour garniture de siège d'auto selon une des revendications 1 to 5, charactérisé par le fait qu' il est lavé, désencollé, déminéralisé, blanchi et mercerisé.

7. Tissu pour garniture de siège d'auto selon la revendication 1, charactérisé par le fait que sont utilisés pour la teinture des colorants de cuve ou des colorants réactifs mono- ou multifonctionnels hautement solides à la lumière, seuls ou en trichromie, et qui satisfont aussi aux exigences de l'industrie automobile en ce qui concerne les solidités au frottement et au mouillé.

8. Tissu pour garniture de siège d'auto selon une des revendications 1 à 7, charactérisé par le fait que ce tissu est traité séparément par foulardage ou vaporisation avec un produit spécial à base de **Sanitize 2724** contre la décomposition et les moisissures puis est séché.

9. Tissu pour garniture de siège d'auto selon une des revendications 1 à 8, charactérisé par le fait que ce tissu est traité avec un produit ignifuge à base d'un composé phosphaté qui n'altère pas les solidités à la lumière (FAKRA) et au frottement.
